Europäisches Patentamt

**European Patent Office**

**Office européen des brevets**

(11) Publication number : **0 476 916 A1**

# (12) EUROPEAN PATENT APPLICATION

(21) Application number : **91308284.8**

(22) Date of filing : **11.09.91**

(51) Int. Cl.⁵ : **H01M 6/50, H01M 6/04**

(30) Priority : **13.09.90 US 582737**

(43) Date of publication of application :
**25.03.92 Bulletin 92/13**

(84) Designated Contracting States :
**DE FR GB**

(71) Applicant : **WESTINGHOUSE ELECTRIC CORPORATION**
**Westinghouse Building Gateway Center**
**Pittsburgh Pennsylvania 15222 (US)**

(72) Inventor : **Shuster, Nicholas**
**PO Box 577**
**Madison, Ohio 44057 (US)**

(74) Representative : **van Berlyn, Ronald Gilbert**
**23, Centre Heights**
**London, NW3 6JG (GB)**

(54) **Aluminum-silver oxide battery system.**

(57)    An aluminum-silver oxide battery system (10) efficiently discharges at a low power density and at a higher power density of more than ten times the low power density.

The battery system (10) has a battery stack (13) of cells (14). Each cell has an aluminum anode (20) and a silver oxide cathode (22), both of which are disposed in an aqueous alkaline electrolyte solution (16). The solution has a hydroxyl concentration of between about 0.1 M and 1 M when the system operates at low power and then has a hydroxyl concentration of at least about 3 M when the system operates at a higher power of more than about ten times the low power density. A reservoir (60) containing alkaline electrolyte is in flow communication with the aqueous alkaline electrolyte solution (16) in the system (10). An injection valve (64) operatively connected with the reservoir (60) injects alkaline electrolyte into the aqueous alkaline electrolyte solution.

EP 0 476 916 A1

FIG.1.

FIG.2.

This invention relates to an aluminum-silver oxide battery system which can be discharged at low power density levels with high columbic efficiency and, more particularly, to an aluminum-silver oxide battery system which can be efficiently discharged at a low power density level and also efficiently discharged at a higher power density level which is at least about eight times the low power density level.

Onboard power systems are employed to propel in-water and underwater vehicles such as electric torpedoes, mobile targets, mobile mines, swimmer delivery vehicles and acoustic countermeasures through the water. Some types of these vehicles travel for long durations of time and at different speeds. Certain advanced torpedoes, for example, are designed to travel at low speeds for long periods of time of up to an hour or more during a "search" mode and then switched to higher speed travel at about twice the low speed or more for durations of time of up to an hour during a "pursuit" mode. In addition, power systems for these types of applications must be as quiet as practical to delay their detection and as safe and as structurally simple as possible to assure their reliability. Importantly, the system should be as lightweight as is practicable so as to not burden the vehicle.

It has been proposed to employ independent power sources such as boilers and/or batteries in parallel to power multi-speed vehicles such as dual speed torpedoes. However, the total energy actually provided by parallel systems depends upon how closely the operating condition approaches the design condition. For example, in one design, a dual speed torpedo may have a total amount of energy theoretically available which is equally split between a low power system (for low speed travel) and a high power system (for high speed travel). However, less than about half of the total energy actually will be available in situations where the torpedo is deployed with little low speed travel or little high speed travel. If a single power source were employed instead of parallel dual power sources in such situations, the total energy available could be employed to extend the operations of the torpedo in the other mode. Importantly, the low power search time would be greatly extended by such a design.

Boilers and their appurtenant apparatus are generally unsuitable for use in the dual speed torpedoes and similar vehicles because of their excessively high noise levels and also safety considerations.

Highly energy dense battery systems have been demonstrated to be useful for powering torpedoes at high speeds when the power densities of the battery anodes are high enough to obtain good anode utilization rates in spite of the corrosion currents. An aluminum-silver oxide battery system is particularly useful at high power levels. This electrochemical system has a theoretical emf of +2.87 volts based on published free energy of formation data. Also, it has a theoretical specific energy of about 915 Whr/kg (415 Whr/lb) based on the weight of the reactants (and assuming sodium hydroxide is employed). A high power density aluminum-silver oxide battery system has been developed which employs a 6M sodium hydroxide electrolyte solution and discharges at a current density of about 600 mA/cm$^2$ at 1.6 volts (about 1.0 W/cm$^2$ of active surface area of the anode) with a corrosion current less than about 100 mA/cm$^2$. However, this battery system cannot be effectively employed as a low power system to power a torpedo at half speeds or less where the power level is less than about 0.125 W/cm$^2$ of active anode surface area because the system discharges at less than about 125 mA/cm$^2$ with an unacceptably high corrosion current. A half speed turndown implies a battery system turndown of a factor of 8 because power is proportional to (speed)$^3$. In addition to consuming the anode and the electrolyte, the corrosion undesirably generates a substantial amount of heat (-96.2 kcal/gr-mole Al) which needs to be dissipated and hydrogen which may need to be vented. The following reactions occur in alkaline electrolyte solutions:

Anode : $2\,Al + 80H^- \rightarrow 2\,AlO_2^- + 4\,H_2O + 6$ electrons
Cathode : $3\,AgO + 3\,H_2O + 6$ electrons $\rightarrow 3\,Ag + 6\,OH^-$
Overall Electrochemical : $2\,Al + 3\,AgO + 2\,OH^- \rightarrow 2\,AlO_2^- + 3\,Ag + H_2O$
Corrosion : $2\,Al + 2\,H_2O + 2\,OH^- \rightarrow 2\,AlO_2^- + 3\,H_2$
Regeneration : $AlO_2^- + 2\,H_2O \rightarrow Al\,(OH)_3 + OH^-$

It is an object of the present invention to provide an aluminum-silver oxide battery system which efficiently operates at a low power density and at a substantially higher power density. It is also an object of the present invention to provide a battery system which efficiently operates at two such power densities for long durations of time. It is a further object of the present invention to provide a battery system which can be rapidly switched from a stable low power density to a substantially higher stable power density.

With these objects in view, the present invention relates to an aluminum-silver oxide battery system which efficiently discharges at a low-power density and at a higher power density of more than about eight times the low power density. The system comprises a battery stack of cells. Each cell has an aluminum anode and a silver oxide cathode which are both disposed in an aqueous electrolyte solution. The electrolyte solution has a hydroxyl concentration of between about 0.1 M and about 1 M when the system operates at a low power density and at least about 3 M when the system operates at a higher power density. Preferably, the alkaline electrolyte is an alkaline hydroxide such as sodium hydroxide, potassium hydroxide and lithium hydroxide. A reservoir is in flow communication with the electrolyte solution for adding alkaline electrolyte to the solution.

An injection means is operatively connected with the reservoir for injecting alkaline electrolyte into the aqueous alkaline electrolyte solution to operate the system at a higher power density. of more than about eight times the low power density. Battery systems embodying the present invention efficiently operate at less than about 0.125 W/cm² of active anode surface area and at more than about 1 W/cm² with high columbic efficiencies of more than 50%. Such a battery system has a system specific energy of at least about 200 Whr/kg based on the total battery system weight. A preferred embodiment of the present invention operates at a high power density of at least about 1 W/cm² and at a low power density of less than about 0.05 W/cm² with a columbic efficiency of at least 85% during both modes of operation. Such a battery system has a specificenergy of at least about 350 Whr/kg.

The invention will become more readily apparent from the following description of a preferred embodiment thereof shown, by way of example only, in the accompanying drawings, wherein:

Figure 1 is a schematic representation of a battery system which embodies the present invention;

Figure 2 is an enlarged representation of a battery stack of cells;

Figure 3 shows a trace of the current and the voltage as a function of time of a demonstration battery stack;

Figures 4 and 5 show two enlarged portions of the traces of Figure 3; and

Figure 6 shows traces of the power density over time of another demonstration battery stack.

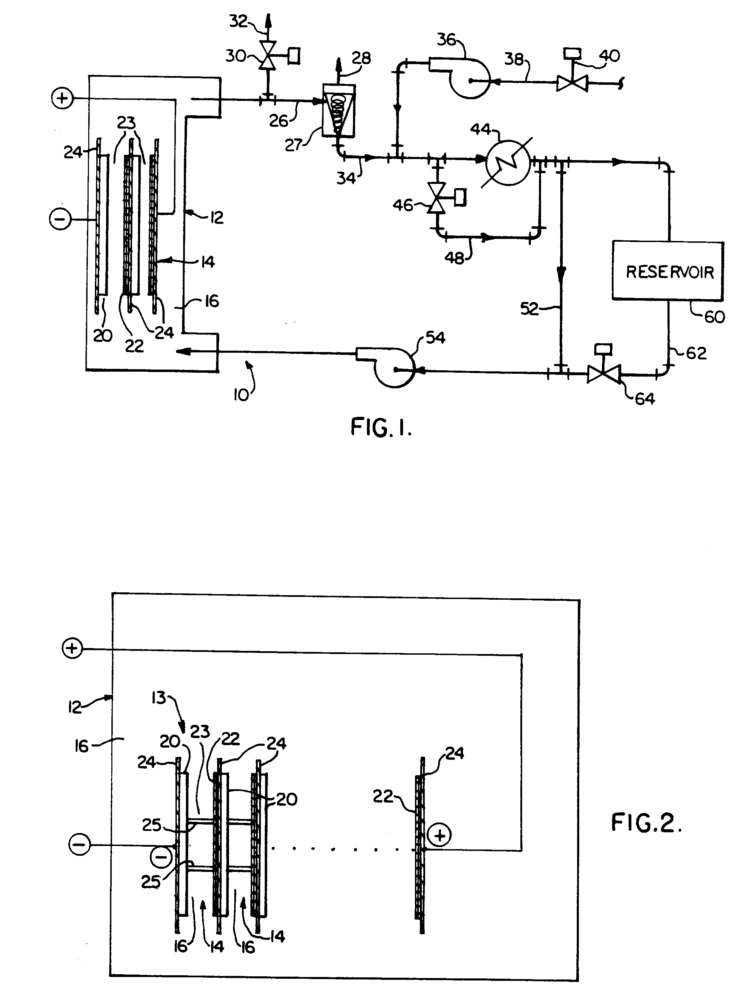

Figure 1 generally shows a battery system 10 for efficiently powering an in-water or underwater vehicle at different speeds. As is best seen in Figure 2, a battery 12 contains a stack 13 of bipolar cells 14 in an aqueous alkaline electrolyte solution 16. Each cell 14 has an aluminum anode 20 and a silver oxide cathode 22 separated by a narrow electrode gap 23 of between about 0.05 mm and about 10 mm (about 20 to about 500 mils) through which the solution 16 circulates. The stack 13 is typically arranged such that the anode 20, of one cell 14 and the cathode 22 of the adjacent cell 14 are separated by a nonporous electrically conducting bipolar wall 24 such as a nickel foil. The electrode gap 23 of each cell 14 is maintained by small spacers such as small beads 25 mounted on the anode 20 or the cathode 22. The small beads 25 of the cells 14 may be aligned and the cells 14 compressed to form a mechanically stable stack 13. The anode 20 may be metallic aluminum or an aluminum alloy. The electrolyte is preferably an alkaline hydroxide such as sodium hydroxide, lithium hydroxide or potassium hydroxide or other equivalent compound. As the electrochemical and corrosion reactions proceed in the battery 12, the electrolyte absorbs the heats of reaction and the hydroxide concentration decreases while the aluminum hydroxide concentration increases.

The electrolyte solution flows from the battery 12 through a short line 26 to a separator 27 for venting the hydrogen generated by the corrosion reaction through a line 28. The separator 27 may be a dynamic type of separator or a static type of separator. An operated valve 30 in a bleed line 32 may be employed to bleed a small amount of electrolyte solution from the system to control the concentration of the solution. Makeup water may be introduced into the system 10, e.g., at line 34, by a pump 36 in a line 38 having an operated valve 40. Typically, the makeup water is taken from the aqueous environment and the electrolyte solution is discharged into the environment.

The alkaline solution 16 flows through a heat exchanger 44 which absorbs heat from the electrolyte solution. Typically, the heat is absorbed by the aqueous environment. The maximum temperature of the solution is less than about 120°C. An operated valve 46 in bypass line 48 or another suitable device may be employed to control the temperature of the aqueous solution 16 in the line 52 from the heat exchanger 44. The cooled electrolyte solution 16 then flows back to the battery 12. As is shown, a pump 54 in line 52 may be employed to circulate the electrolyte solution 16 throughout the system 10. The flow rate during the low power period need only be about 10% or less of the flow rate during the high power period. Thus in some embodiments, the pump 54 need only be intermittently operated to remove heat and reaction products. In another embodiment, two pumps (not shown) are employed in place of pump 54, one of which operates at a low noise level during the search mode and the other of which operates during the pursuit mode.

A reservoir 60 in a flow loop comprising line 62 is in flow communication with the aqueous alkaline electrolyte solution 16 for adding a concentrated alkaline electrolyte solution in the reservoir 60 to the electrolyte solution via an operated injection valve 64 or other suitable injection device. The alkaline electrolyte is preferably pumped from heat exchanger 44 through the reservoir 60 and into line 52 before the pump 54 so that the pump 54 may be effectively employed to thoroughly mix the solutions together. Alternatively, the alkaline electrolyte may be added elsewhere in the system 10 including directly into the battery 12. Also, the alkaline electrolyte in the reservoir 60 may be a solid (rather than a solution) so that the heat of solution will raise the temperature of the electrolyte solution about 30°C to about 100°C to rapidly increase the power density level. In this embodiment, a shutoff valve upstream of the reservoir 60 may be employed (not shown).

In the operation of the battery system 10 during the "search" mode of a deployed torpedo, the electrolyte solution 16 can circulate for long durations of time of up to an hour or more with the injection valve 64 adjusted to either continuously or periodically inject electrolyte into the electrolyte solution 16 to replace the hydroxide which reacts with the aluminum in the electrochemical and the corrosion reactions. Makeup water may be continuously or periodically added by pump 36 to replace the reactant water, which reacts at the cathode in the electrochemical reaction and at the anode in the corrosion reaction and in the hydroxide regeneration reaction.

If necessary, electrolyte solution 16 may be bled from the system 10 via line 32 in order to maintain the concentration of the reaction products below a maximum concentration. Also, generated hydrogen which is not absorbed by the electrolyte solution 16 may separate from the electrolyte solution 16 in a separator 27 and vent to the environment through line 28.

When the torpedo is switched from the search mode to the pursuit mode, the injection valve 64 is opened to inject large amounts of electrolyte into the electrolyte solution to increase its hydroxyl concentration from between about 0.1 M to about 1 M up to about 3 M hydroxide or more.

A particularly preferred aluminum-silver oxide battery which provides up to about 600 kW of power may be employed to propel a torpedo at 33% of full speed in its "search" mode and at full speed in its "pursuit" mode. The battery system has two battery stacks disposed in parallel with about 215 bipolar cells per stack and each cell has an active anode surface area of about 1350 $cm^2$. The anode is an aluminum alloy developed by the U.S. Navy generally known as RX808, or similar alloy which is known by those skilled in the art to be efficient for use in highly alkaline electrolyte solutions.

When operating at full speed in the "pursuit" mode, the electrolyte solution contains at least about 6 M hydroxide and preferably contains up to about 20 gr/liter sodium stannate as a corrosion inhibitor. In other embodiments, the electrolyte solution contains, alternatively, or in addition to sodium stannate, zinc or an organic compound such as EDTA (Ethylene Diamine Tetra-acetic Acid) as a corrosion inhibitor to reduce or prevent dendrite formation in the battery stacks. The use of sodium stannate and EDTA was found to be particularly effective in limited testing. When operating at full speed conditions, the battery, system operates at a power density of about 1 $W/cm^2$ and discharges at a current density of about 640 $mA/cm^2$ at 1.6 volts. The corrosion density is about 70 $mA/cm^2$ and the aluminum anode utilization rate is about 90%. Under these high power density conditions, the total waste heat generated is about 7500 kcal/min. In addition, approximately 280 liters minute of hydrogen are generated (at standard temperature and pressure).

When the torpedo operates at about 33% of full speed during the "search" mode, the battery system provides only about 20 kW at a low power density of 0.0324 $W/cm^2$ of active anode surface area.

% power at low speed = $(fraction)^3$ (full power)

% power at 1/3 speed = $(1/3)^3$ (600 kW)

% power at 1/3 speed $\sim$ 20 kW

At a nominal voltage of 1 volt, the low power current density of the battery at low speed is only about 32 $mA/cm^2$ which is only about 5% of the high power current density. As the below-described tests demonstrate, the use of a 0.25 M hydroxide solution containing 3-4 grams of sodium stannate corrosion inhibitor as an electrolyte solution will result in a high columbic efficiency (about 87% measured over 4.5 hours at 47°C). The load current density employing such a solution is (according to the tests) about 31 $mA/cm^2$ (at 1.3 volts) and the corrosion current is about 4.6 $mA/cm^2$. At this corrosion current density, only about 6.6% of the hydrogen generated at full power is generated at low power (and 33% of full speed). Assuming a constant temperature rise in the electrolyte solution for both speeds, the electrolyte flow rate during the low power density operation is only about 6% of the flow rate during the high power density operation.

Switching from one-third speed to full speed, i.e., from low power density to high power density, is efficiently effected by rapidly adding about 250 grams of sodium hydroxide and about 15 grams of sodium stannate into each liter of electrolyte solution in the circulating loop volume. If the sodium hydroxide is added as an anhydrous solid, the temperature rise of the electrolyte solution is from about 40°C to about 100°C.

An optimized aluminum-silver oxide battery system for powering the dual speed torpedo operates at about 1.5 volts or more and provides more than about 400 Wh/kg (180 Wh/lb) of reactant whatever the torpedo speed may be. For a fixed energy system, the battery will provide low power and/or high power at more than about 1.5 volts at a columbic efficiency of 90% and thereby realize a battery system specific energy of 220 Wh/kg of total system weight regardless of the deployment conditions.

The following tests demonstrate that an aluminum-silver oxide battery system embodying the above described invention will efficiently operate at low power densities below about 0.125 $W/cm^2$ and at current densities below 125 $mA/cm^2$ for long durations of time.

In a first demonstration test, a 25 cell, 60 $cm^2$ active anode surface per cell aluminum-silver oxide battery system employing a 6-8 M hydroxide electrolyte solution was pulsed 45 times in a 65 minute period between a low power level of 0.013 $W/cm^2$ of active anode surface and a high power level of 1.85 $W/cm^2$. It is noted that this change in power densities brackets the 0.0324 $W/cm^2$ to 1.5 $W/cm^2$ power densities of the above-described battery system. This demonstration battery exhibited stable and reproducible performance throughout the entire test period. Also, no detrimental effects of power level changes were observed.

In a second demonstration test, a single cell, 25 cm$^2$ active anode surface area per cell aluminum-silver oxide battery system was pulsed more than 35 times in a three hour period between a design low power level of about 0.013 W/cm$^2$ and a design high power level of 1.85 W/cm$^2$. The electrolyte solution had a hydroxyl concentration of between 6-8 molar at low-power densities and high power densities. No attempt was made to optimize the electrolyte solution or to control corrosion at low power density. Rather, the goal was to demonstrate that once at high electrolyte solution molarity, power level switching could be virtually instantaneous.

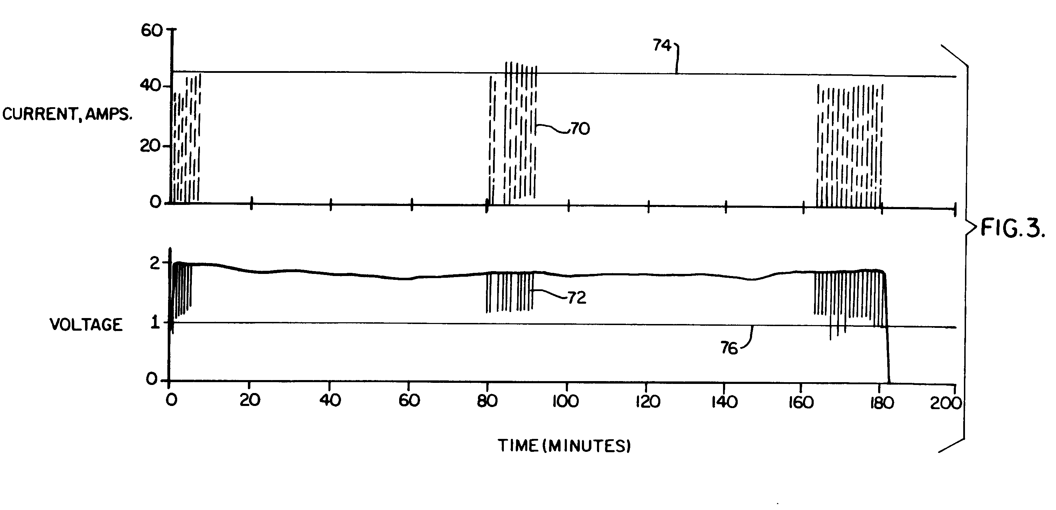

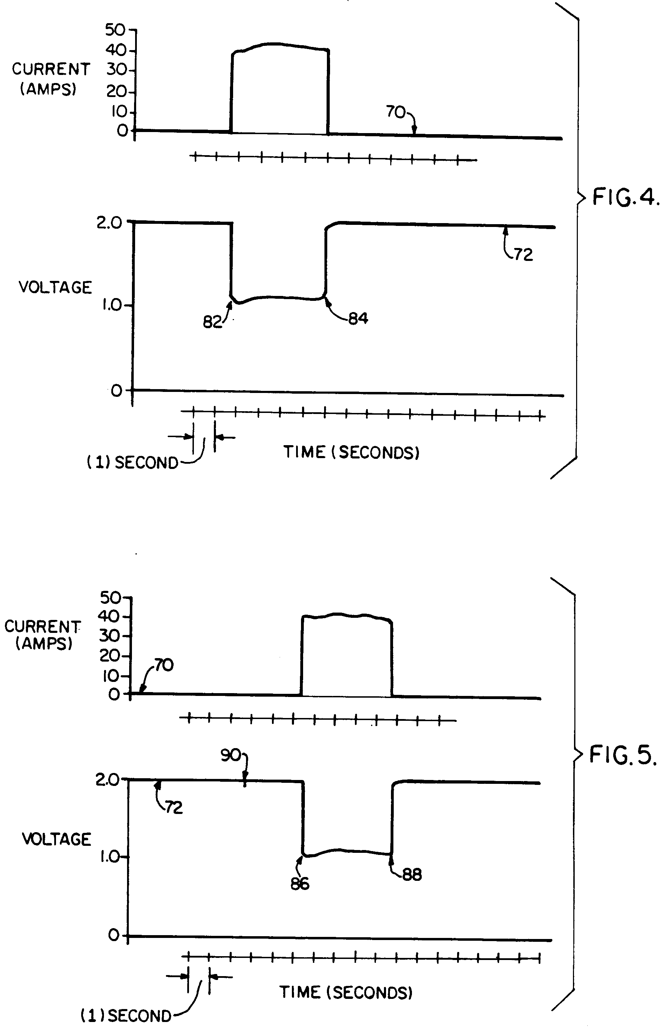

Figure 3 presents the system output current (amps) and voltage as traces 70 and 72, respectively, for the 3 hour test. The constant current line 74 indicates the design current density of 1.85 amps/cm$^2$. The constant voltage line 76 indicates the design minimum voltage of 1 volt per cell. Enlarged Figures 4 and 5 show the effect of switching power for the 25th and 27th pulses respectively. As these Figures 3, 4 and 5 indicate, the power level changes were rapid and they presented no particular difficulty. In the 3 hour test, the circulation pump was occasionally shut off between pulses and switched on just prior to switching to high power. Points 82 and 84 on Figure 4 indicate the points in time when the pump was switched on and off at the 25th pulse. Points 86 and 88 on Figure 5 indicate the points in time when the pump was switched on and off at the 27th pulse. Point 90 on Figure 5 indicates the point in time when the pump was switched off following the 26th pulse. The traces 70 and 72 on Figures 4 and 5 indicate that the electrolyte solution flow rate may be significantly reduced during low power periods in some embodiments and that natural circulation of the solution may even be sufficient in some of these cases. In the use of such a battery system for naval electric torpedo propulsion, where a battery system must provide low power for extended periods of time, the operation of the circulating pump at low or no flows would advantageously conserve energy and reduce detectible noise during the low power period.

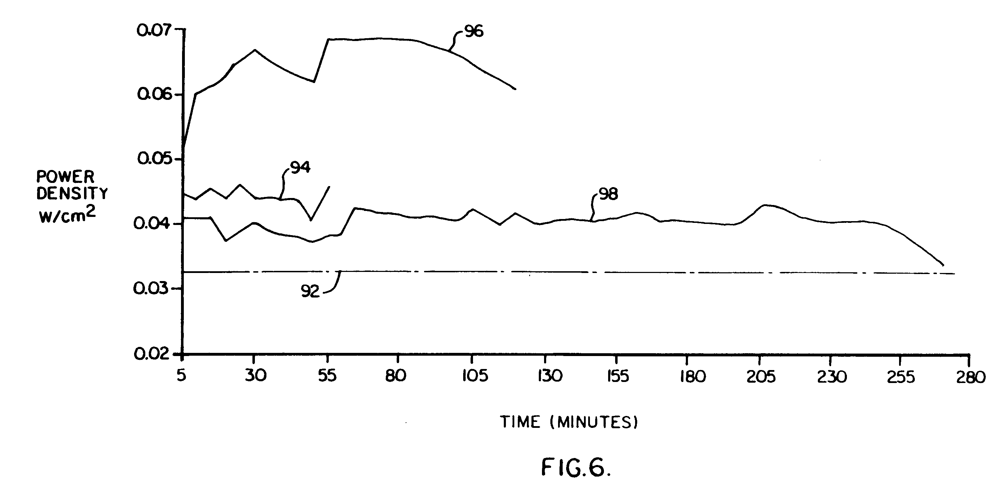

In a third series of tests, a demonstration cell employing electrodes having active surface areas of 4 cm$^2$ was discharged at a low design power of about 0.032 W/cm$^2$ under different operating conditions to gauge its low power performance under what were projected to be corrosive conditions. The aluminum anode was .2 mm (8 mils) thick and backed with nickel. The electrode gap was 10 mm (375 mils). Trace 92 of Figure 6 indicates the design point of 0.032 W/cm$^2$ of active anode surface area. Trace 94 indicates the operating power level of the cell in a test wherein a 0.38 M sodium hydroxide electrolyte solution was maintained at 67°C for almost an hour. The aluminum anode utilization rate was not determined. Trace 96 indicates the operating power level of the cell in a test wherein a 0.30 M sodium hydroxide electrolyte solution was maintained at 57°C for about two hours. The aluminum anode utilization was 54%. Trace 98 indicates the operating power level of the cell in a test wherein a 0.25 M sodium hydroxide electrolyte solution containing 3-4 grams/liter sodium stannate corrosion inhibitor was maintained at 47°C for over four hours. The aluminum anode utilization was 87% based on its initial weight. The 3 hour test was terminated when the aluminum was exhausted. It could have easily been extended if a heavier anode with increased thickness had been employed. It should be noted that the time scale of Figure 6 varies.

## Claims

1. An aluminum-silver oxide battery system (10) which discharges at a low power density and at a higher power density of more than about eight times the low power density, characterized by:

   a battery stack (13) of cells (14), each cell (14) having an aluminum anode (20) and a silver oxide cathode (22) both of which are disposed in an aqueous alkaline electrolyte solution (16) selected from sodium hydroxide, potassium hydroxide and lithium hydroxide, the solution having a hydroxyl concentration of between about 0.1 M and about 1 M when the system operates at a low power density and a higher hydroxyl concentration of at least about 3 M when the system operates at a higher power density of more than about eight times the low power density;

   a reservoir (60) containing alkaline electrolyte in flow communication with the aqueous alkaline electrolyte solution (16) in the system (10);

   an injection valve (64) operatively connected with the reservoir for injecting alkaline electrolyte into or mixing solid hydroxide with the aqueous alkaline electrolyte solution.

2. The battery system (10) of claim 1, wherein the battery system (10) operates at a high power density of at least about 1 W/cm$^2$ of active anode surface area and operates at a low power density of less than about 0.125 W/cm$^2$ of active anode surface area.

3. The battery system (10) of claim 2, wherein the battery system operates at a low power density of less than about 0.05 W/cm$^2$ of active anode surface area.

4. The battery system (10) of claim 1 having a system specific energy of at least about 200 Wh/kg.

5. The battery system (10) of claim 4 having a system specific energy of at least about 350 Wh/kg.

6. The battery system (10) of claim 1 having a columbic efficiency of at least 50%.

7. The battery system (10) of claim 6 having a columbic efficiency of at least 85%.

8. The battery system (10) of claim 1, wherein the reservoir (60) contains an alkaline electrolyte in the form of an aqueous alkaline electrolyte solution.

9. The battery system (10) of claim 1, wherein the reservoir (60) contains an alkaline electrolyte in the form of a solid.

10. An aluminum-silver oxide battery system (10), characterized by:

a battery stack (13) of cells (14), each cell having an aluminum anode (20) and a silver oxide cathode (22), both of which are disposed in an aqueous alkaline electrolyte solution containing from about 0.1 M to about 1 M of an alkaline hydroxide selected from the group consisting of sodium hydroxide, potassium hydroxide and lithium hydroxide and a corrosion inhibitor selected from the group consisting of tin, zinc, EDTA, and mixtures thereof;

a reservoir (60) containing the alkaline hydroxide in flow communication with the aqueous alkaline electrolyte solution;

an injection valve (64) operatively connected with the reservoir for injecting the alkaline hydroxide in the reservoir into the aqueous alkaline electrolyte solution in an amount sufficient to increase its concentration to at least 3 M alkaline hydroxide.

FIG. I.

FIG.2.

FIG. 3.

FIG.4.

FIG.5.

FIG.6.

EP 0 476 916 A1

European Patent
Office

**EUROPEAN SEARCH REPORT**

Application Number

EP 91 30 8284

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 268 828 (S.A.F.T.)<br>* Column 1, line 39 - column 4, line 34 * | 1,9 | H 01 M 6/50<br>H 01 M 6/04 |
| Y | | 10 | |
| Y | US-A-3 513 031 (SOLOMON ZAROMB)<br>* Column 2, line 3 - column 4, line 62 * | 10 | |
| A | JOURNAL OF APPLIED ELECTROCHEMISTRY, vol. 14, 1984, pages 475-480; K.B. SARANGAPANI et al: "Aluminium as anode in primary alkaline batteries. Influence of additives on the corrosion and anodic behaviour of 2S aluminium in alkaline citrate solution"<br>* Whole document * | 10 | |
| X | FR-A-1 320 144 (S.A.M.E.T.O.)<br>* Page 1, right-hand column, line 9 - page 2, left-hand column, line 6; page 3, right-hand column, line 1 - page 4, left-hand column, line 16 * | 1 | TECHNICAL FIELDS SEARCHED (Int. Cl.5)<br><br>H 01 M |
| A | US-A-4 198 474 (PINAKIN M. SHAN)<br>* Figure 11; column 2, line 59 - column 5, line 20 * | 1 | |
| A | US-A-4 897 321 (NICHOLAS SHUSTER)<br>* Whole document * | 1 | |
| A | US-A-3 941 616 (ESKO ENSIO HUHTA-KOWISTO)<br>* Whole document *<br>--- -/- | 1 | |

The present search report has been drawn up for all claims

| Place of search | Date of completion of the search | Examiner |
|---|---|---|
| THE HAGUE | 18-12-1991 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | EP-A-0 307 292  (ETAT FRANCAIS)<br>* Abstract; column 4, line 4 - column 7, line 2 *<br>--- | 1 | |
| A | EP-A-1 177 168  (THE FINNISH MINISTRY OF DEFENCE)<br>* Whole document *<br>--- | 1 | |
| A | FR-A- 394 348  (P. D'ALTON SHEE)<br>* Whole document *<br>----- | 1 | |
| | | | **TECHNICAL FIELDS SEARCHED (Int. Cl.5)** |

The present search report has been drawn up for all claims

| Place of search | Date of completion of the search | Examiner |
|---|---|---|
| THE HAGUE | 18-12-1991 | DE VOS L.A.R. |

EPO FORM 1503 03.82 (P0401)